# EUROPÄISCHE PATENTANMELDUNG

(11) **EP 1 361 388 A1**
(43) Veröffentlichungstag der Anmeldung: **12.11.2003**
(21) Anmeldenummer: 03090054.2
(22) Anmeldetag: 10.03.2003
(51) Int. Cl.: F16L 55/165

(54) **Verbundrohr zum Auskleiden einer Rohrleitung**

(30) Priorität: 08.05.2002 DE 10221570
(71) Anmelder: Mapress GmbH & Co. KG, 40764 Langenfeld (DE)
(72) Erfinder: Speckemeyer, Jens, 45475 Mülheim (DE)
(74) Vertreter: Meissner, Peter E., Dipl.-Ing.

(57) **Zusammenfassung**

Die Erfindung betrifft ein Verbundrohr zum Auskleiden einer Rohrleitung, das eine metallische Innensperrschicht aufweist, die mit einer äußeren Ummantelung aus Kunststoff versehen ist.

Erfindungsgemäß ist die innere Sperrschicht als metallisches Rohr (2) mit einer Wanddicke im Bereich von 0,1 - 0,5 mm ausgebildet. Die äußere Ummantelung ist aus Kunststoff (3), wenigstens 1 mm dick und stoffschlüssig mit dem Metallrohr (2) verbunden.

Um das Verbundrohr vor Beschädigungen zu schützen kannn es mit einer Schutzschicht (5), aus Kunststoff oder Metall, umgeben sein.

## Beschreibung

Die Erfindung betrifft ein Verbundrohr zum Auskleiden einer Rohrleitung gemäß dem Oberbegriff des Patentanspruches 1.

Zur Reduzierung aufwendiger Tiefbauarbeiten werden zunehmend defekte Rohrleitungen nicht wie sonst üblich freigelegt, abgetrennt und durch eine neue Rohrleitung ersetzt, sondern von innen her ausgekleidet. Insbesondere bei Gasleitungen werden dazu vorwiegend Kunststoffrohre verwendet. Um den geltenden Sicherheitsvorschriften zu genügen, müssen relativ dickwandige Rohre verwendet werden, die den Querschnitt aber stark verengen.

Aus der WO 00/25057 A1 ist ein Schlauch zur Auskleidung von Rohrleitungen und ein Verfahren zu dessen Herstellung bekannt. Die vorgeschlagene Auskleidung ist vor allem für Höchstdruckleitungen mit einem Betriebsinnendruck von mehr als 16 bar gedacht. Um Beschädigungen der Rohrauskleidung bei Havarie oder geplanter Außerbetriebnahme der Leitung zu verhindern, weist der Schlauch eine Sperrschicht auf, welche eine niedrige Gas-Permeation hat. Vorzugsweise ist die Sperrschicht aus Metall. Nachteilig bei diesem Verfahren ist, dass der Schlauchrohling mittels eines Klebstoffs an der Innenwandung der Rohrleitung verklebt sein muss, um die hohen Drücke übertragen zu können. Aufwendig ist auch die Aufbringung der Sperrschicht mittels Vakuumaufdampfung oder galvanischer Abscheidung.

Aufgabe der Erfindung ist es ein Verbundrohr zum Auskleiden einer Rohrleitung anzugeben, das kostengünstig herstellbar ist und in einfacher Weise in eine Rohrleitung eingezogen werden kann.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung weist das Metallrohr eine Wanddicke im Bereich von 0,1-0,5 mm auf, während die äußere Ummantelung aus Kunststoff wenigstens 1 mm dick ist. Metallrohr und Kunststoffummantelung sind stoffschlüssig, vorzugsweise durch Kleben, miteinander verbunden.

Die vorgeschlagene Lösung hat den Vorteil, dass das Verbundrohr noch biegbar ist, ohne dass sich beim Biegen Knicke oder Falten bilden können. Eine Verklebung mit der Innenwandung der auszukleidenden Rohrleitung ist nicht erforderlich, da das Verbundrohr selbst druckstabil ist.

Nach einem weiteren Merkmal der Erfindung wird das Metallrohr aus einem hochlegierten Stahl hergestellt, der genügend Festigkeit und Korrosionsbeständigkeit mit sich bringt. Vorzugsweise ist das Metallrohr ein längsnahtgeschweißtes Rohr mit einer Wanddicke von 0,1 mm.

Um die äußere Kunststoffummantelung während des Einziehvorganges in die auszukleidende Rohrleitung vor Beschädigung zu schützen, wird weiterbildend vorgeschlagen, die Kunststoffummantelung außen mit einer verschleißfesten Schutzschicht zu versehen. Diese Schutzschicht kann aus einem verschleißfesten Kunststoff oder einem Metall hergestellt sein.

Die Aufbringung der äußeren Schutzschicht kann auch in Form einer Umwendelung erfolgen. Die Umwendelungen können ein- oder mehrgängig sein. Als Material eignet sich ein Metalldraht oder ein verschleißfestes Kunststoffband. Das Kunststoffband kann durch eingelegte Fasern verstärkt sein.

Weitere Merkmale, Vorteile und Einzelheiten der Erfindung ergeben sich aus der nachfolgenden Beschreibung von einem in einer Zeichnung dargestellten Ausführungsbeispiel.

Es zeigen:
- **Figur 1**: in einem Längsschnitt ein erfindungsgemäß ausgebildetes Verbundrohr,
- **Figur 2**: wie Figur 1 mit einer äußeren Schutzschicht,
- **Figur 3**: wie Figur 1 aber mit einer 2-gängigen Umwendelung,
- **Figur 4**: wie Figur 1 aber mit einer 4-gängigen Umwendelung.

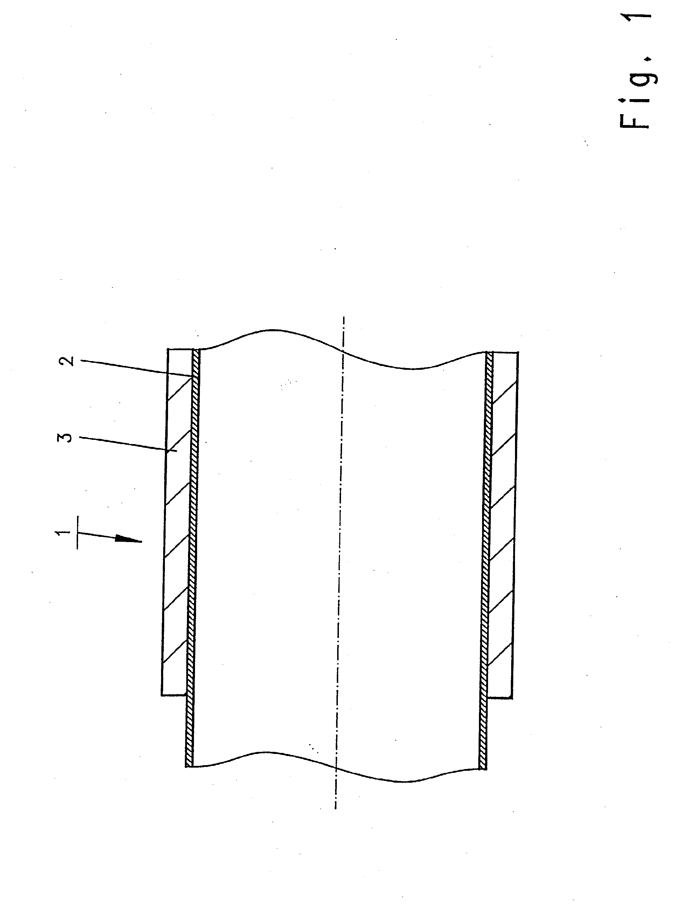

In **Figur 1** ist in einem Längsschnitt ein erfindungsgemäß ausgebildetes Verbundrohr 1 dargestellt. Es besteht aus einem dünnwandigen metallischen Innenrohr 2 und einer stoffschlüssigen damit verbundenen äußeren Kunststoffummantelung 3. Vorzugsweise ist das dünnwandige metallische Innenrohr 2 ein längsnahtgeschweißtes Rohr aus Edelstahl, z. B. 1.4401, mit einer Wanddicke von 0,1 mm. Die Dicke der äußeren Kunststoffummantelung beträgt wenigstens 1 mm. Die stoffschlüssige Verbindung zwischen Innenrohr 2 und Kunststoffummantelung 3 erfolgt in diesem Ausführungsbeispiel durch Kleben. Da diese Schicht sehr dünn ist und sich im µ-Bereich bewegt, ist sie nicht darstellbar.

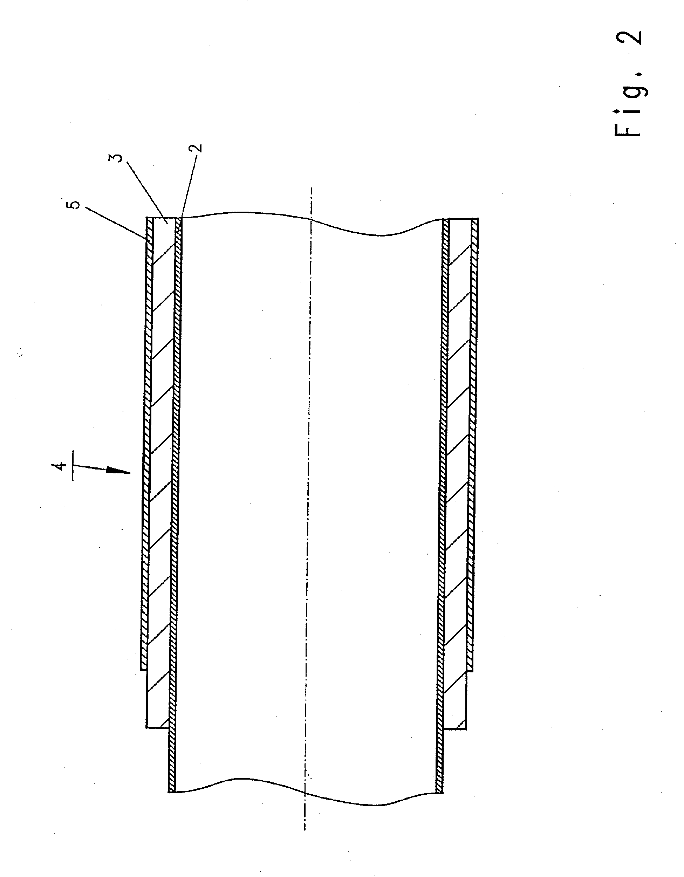

**Figur 2** zeigt ein weiteres Ausführungsbeispiel. Das Verbundrohr 4 weist wiederum ein dünnwandiges metallisches Innenrohr 2 und eine äußere Kunststoffummantelung 3 auf. Um dieses Verbundrohr 4 beim Einschieben in die auszukleidende Rohrleitung (hier nicht dargestellt) vor Beschädigung zu schützen, ist außen eine Schutzschicht 5 als Mantelschicht angeordnet. Diese Schutzschicht 5 kann aus einem verschleißfesten Kunststoff oder aus Metall bestehen.

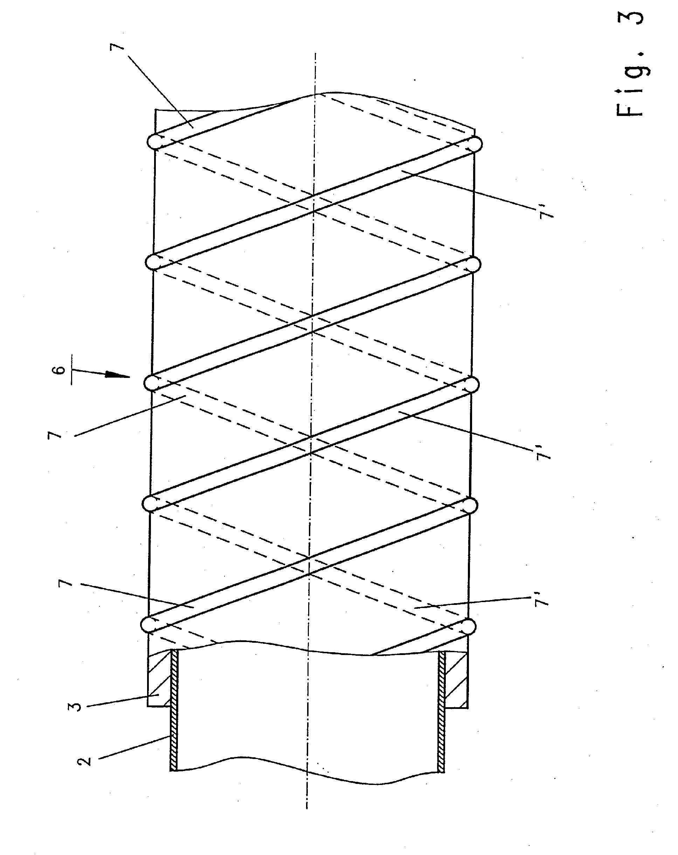

Zur Aufrechterhaltung einer möglichst hohen Biegbarkeit wird gemäß **Figur 3** vorgeschlagen, die Schutzschicht in Form einer Umwendelung aufzubringen.

Das hier gezeigte Verbundrohr 6 ist vergleichbar wie das in **Figur 2** dargestellte aufgebaut mit einem dünnwandigen metallischen Innenrohr 2 und einer äußeren Kunststoffummantelung 3. Die Schutzschicht ist hier als Metalldraht 7, 7' ausgebildet, der in diesem Ausführungsbeispiel zweigängig um die äußere Kunststoffummantelung 3 gewickelt ist.

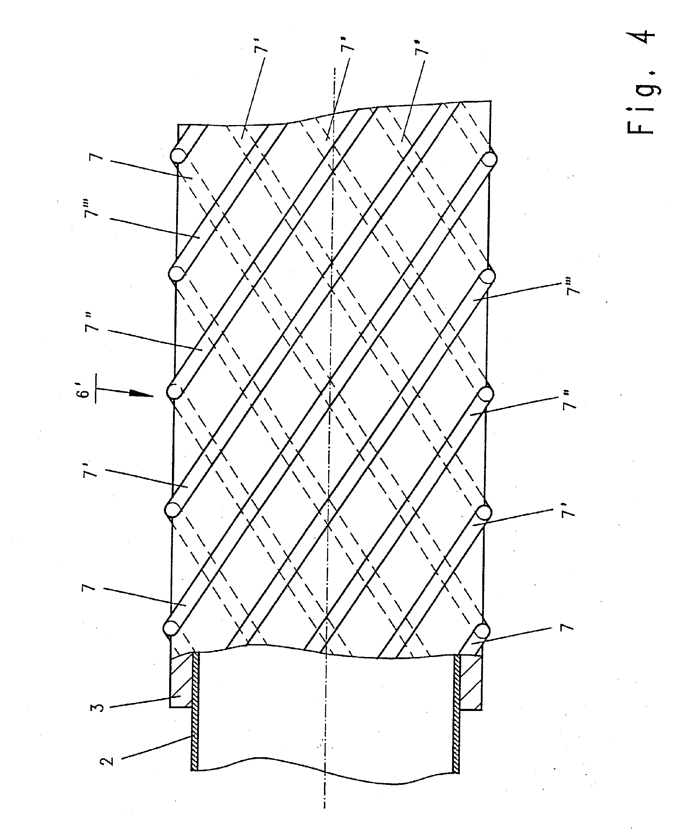

In **Figur 4** ist dargestellt, dass die Umwendelung auch vielgängig, z. B. viergängig, sein kann.

| **Bezugszeichenliste** | |
|---|---|
| **Nr.** | **Bezeichnung** |
| 1 | Verbundrohr |
| 2 | metallisches Innenrohr |
| 3 | äußere Kunststoffummantelung |
| 4 | Verbundrohr |
| 5 | Schutzschicht |
| 6, 6' | Verbundrohr |
| 7 | Metalldraht |

## Patentansprüche

1. Verbundrohr zum Auskleiden einer Rohrleitung, das eine metallische Innensperrschicht aufweist, die mit einer äußeren Ummantelung aus Kunststoff versehen ist
**dadurch gekennzeichnet,**
**dass** die innere Sperrschicht als metallisches Rohr (2) ausgebildet ist mit einer Wanddicke im Bereich von 0,1 - 0,5 mm und die äußere Ummantelung aus Kunststoff (3) wenigstens 1 mm dick und stoffschlüssig mit dem Metallrohr (2) verbunden ist.

2. Verbundrohr nach Anspruch 1
**dadurch gekennzeichnet,**
**dass** zwischen Metallrohr (2) und Kunststoffummantelung (3) eine Klebeschicht angeordnet ist.

3. Verbundrohr nach Anspruch 1 und 2
**dadurch gekennzeichnet,**
**dass** das Metallrohr (2) aus einem hochlegierten Stahl hergestellt ist.

4. Verbundrohr nach Anspruch 3
**dadurch gekennzeichnet,**
**dass** das Metallrohr (2) ein längsnahtgeschweißtes Rohr ist mit einer Wanddicke von 0,1 mm.

5. Verbundrohr nach einem der Ansprüche 1 - 4
**dadurch gekennzeichnet,**
**dass** die Kunststoffummantelung (3) außen mit einer verschleißfesten Schutzschicht (5) versehen ist.

6. Verbundrohr nach Anspruch 5
**dadurch gekennzeichnet,**
**dass** die Schutzschicht (5) ein verschleißfester Kunststoff ist.

7. Verbundrohr nach Anspruch 5
**dadurch gekennzeichnet,**
**dass** die Schutzschicht (5) aus Metall ist.

8. Verbundrohr nach einem der Ansprüche 5 - 7
**dadurch gekennzeichnet,**
**dass** die Schutzschicht wendelartig die Kunststoffummantelung (3) umschließt.

9. Verbundrohr nach Anspruch 7 und 8
**dadurch gekennzeichnet,**
**dass** die Schutzschicht als Metalldraht (7) ausgebildet ist.

10. Verbundrohr nach Anspruch 6 und 8
**dadurch gekennzeichnet,**
**dass** die Schutzschicht als Kunststoffband ausgebildet ist.

11. Verbundrohr nach Anspruch 10
**dadurch gekennzeichnet,**
**dass** das Kunststoffband mit eingelegten Fasern versehen ist.

12. Verbundrohr nach den Ansprüchen 8 - 11
**dadurch gekennzeichnet,**
**dass** die Umwendelung ein- oder mehrgängig ist.
